# EUROPÄISCHE PATENTSCHRIFT

(11) **EP 3 188 822 B1**
(45) Veröffentlichungstag und Bekanntmachung des Hinweises auf die Patenterteilung: **17.07.2019**
(21) Anmeldenummer: 15794061.0
(22) Anmeldetag: 04.09.2015
(51) Int. Cl.: B01D 63/08, B01D 65/02

(54) **SELBSTREINIGENDES DEAD-END FILTERSYSTEM MIT MIKROSIEB**
SELFCLEANING DEAD-END FILTER SYSTEM WITH MICROSIEVE
SYSTEME DE FILTRE AUTONETTOYANT À MICRO-TAMIS

(30) Priorität: 05.09.2014 DE 102014112798
(43) Veröffentlichungstag der Anmeldung: 12.07.2017
(73) Patentinhaber: Christian-Albrechts-Universität zu Kiel, 24118 Kiel (DE)
(72) Erfinder: BAHR, Jörg, 24161 Altenholz-Klausdorf (DE); CARSTENSEN, Jürgen, 24146 Kiel (DE); FÖLL, Helmut, 24248 Mönkeberg (DE)
(74) Vertreter: Hansen, Jochen
(86) Internationale Anmeldenummer: PCT/DE2015/100372
(87) Internationale Veröffentlichungsnummer: WO 2016/034172

(56) Entgegenhaltungen:
- WO-A1-94/21361
- WO-A1-98/56493
- US-A- 3 490 584
- US-A1- 2003 209 500
- US-B1- 6 423 638

## Beschreibung

Die Erfindung betrifft eine Vorrichtung zur Filtration von Suspensionen mit einem Mikrosieb, wobei das Mikrosieb mit Ultraschall beaufschlagt wird, um den Filterkuchen vom Mikrosieb abzulösen. Die Erfindung betrifft auch ein Filtersystem, bei dem das Permeat in einem Filtrationsschritt ohne Aufkonzentrieren vom Retentat getrennt wird, d.h. es wird als Dead-End-System betrieben.

Bei einer Filtration wird ein Filter, typisch eine Membran, unter Druckbedingungen zur Trennung von Partikeln aus Fluiden verwendet. Unter einer Mikrofiltration versteht man die Filtration einer Suspension von kolloidalen oder anderen Mikropartikeln mit einer linearen Dimension von etwa 0,02 µm bis etwa 10 µm, wobei der Betriebsdruck üblich zwischen 0,02 MPa und 0,5 MPa beträgt. Wenn die Membran Poren aufweist, die sämtlich kleiner sind als die abzutrennenden Partikel, so spricht man von einer Oberflächenfiltration und bezeichnet die Membran auch als Mikrosieb.

Typische Anwendungsgebiete der Mikrofiltration liegen in der Abtrennung von Bakterien, Hefen, emulgierten Ölen und Fetten aus Brauchwasser oder auch aus Getränken sowie in der Entnahme von Partikeln aus Produktionsprozessen.

Die gängigen Betriebsarten der Mikrofiltration werden in "Cross-Flow" und in "Dead-End" unterschieden.

Bei der Cross-Flow Filtration wird die Suspension entlang der Membranoberfläche geströmt, wobei nur ein kleiner Teil des Fluids als Permeat durch die Membran tritt. Die Suspension wird wiederholt mit hoher Fließgeschwindigkeit - oft mehrere Meter/Sekunde - an der Membran entlang geführt, so dass eine Aufkonzentrierung stattfindet, solange die Suspension pumpbar bleibt. Es bildet sich kein Filterkuchen vor der Membran, da dieser durch das schnell strömende Fluid laufend mitgerissen wird. Gleichwohl kann es zu Verunreinigungen der Membran kommen, beispielsweise durch biologische Suspensionen, was man als Fouling bezeichnet. Zur Beseitigung solcher Verunreinigungen ist es z.B. aus der Druckschrift US 2004/0016699 A1 bekannt, die Filtermembran mit Ultraschall zu beaufschlagen.

Der Fachmann kennt Ultraschallbäder zur gründlichen Reinigung von verschmutzten, harten Werkstückoberflächen. Das Reinigungsprinzip basiert auf der Bildung von Kavitationsblasen in einer Reinigungsflüssigkeit, typisch Wasser ggf. mit Zusätzen, die von einem Ultraschallwellenfeld durchsetzt ist. Die Blasen entstehen und implodieren dabei vorwiegend an den Grenzflächen des Reinigungsgutes. Während der Implosionen entstehen lokalisierte, sehr hohe Strömungsgeschwindigkeiten, die die Verunreinigung von der Oberfläche abreißen und fortspülen.

Der Ultraschall kann insbesondere auch durch eine Suspension hindurch auf eine Filtermembran eingestrahlt werden. Allerdings verträgt sich die Kavitation nicht gut mit der hohen Vorbeiflussgeschwindigkeit der Suspension in einem Cross-Flow-Filter, so dass die Filtration während der Reinigung gestoppt werden muss.

Bei der Dead-End Filtration wird die Suspension im Wesentlichen senkrecht auf die Membran eingeströmt, und die Trennung von Permeat und Mikropartikeln erfolgt in nur einem Filterschritt ohne Aufkonzentrieren, wenn die Membran ein Mikrosieb ist und das Permeat nur durch das Mikrosieb hindurch und nicht in einen Rückflusskreislauf entweichen kann. Die zurückgehaltenen Mikropartikel werden an der Membranoberfläche angereichert und bilden einen Filterkuchen, dessen Dicke und Undurchlässigkeit für das Permeat mit der Filtrationszeit zunehmen. Deshalb muss die Membran im Dead-End Betrieb gewöhnlich durch Rückspülen und möglicherweise unter Verwendung chemischer oder mechanischer Reinigungsmittel einer periodischen Reinigung unterzogen werden.

Aus der Druckschrift DE 201 19 909 U1 ist ein Filterelement für Flüssigkeiten mit einem Verblockungsschutz bekannt, wobei als Verblockungsschutz wenigstens eine Ultraschallquelle auf der Konzentratseite angeordnet ist, was ein Anheften von zurückgehaltenen Partikeln an einer Filterfläche verhindern soll.

US6423638 B1 offenbart ein Filtersystem zur Filtration einer Suspension mit einem starren Mikrosieb und eine das Mikrosieb mit Ultraschall beaufschlagende Einrichtung.

Aus der WO 2014/084997 A1 ist ein Filtersystem und Verfahren zum Filtern bekannt, mit denen beispielsweise Grauwasser filtriert werden kann und wobei mittels in der Vorrichtung erzeugten Druckwellen sich an den Filterelementen ansammelnde Partikel gelöst und dann von den Filterpartikeln entfernt werden können.

Die US 2005/0235619 A1 beschreibt eine Filteranordnung, bei der über eine mehrschichtige Faserfilteranordnung Mikropartikel als auch Partikel im Nanometerbereich herausgefiltert werden können, wobei unter anderem auch Ultraschallwellen verwendet werden.

Aus Chen, D.; Weavers, L.K.; Walker, H.W.: Ultrasonic control of ceramic membrane fouling: Effect of particle characteristics. In: Water Res., Bd. 40, 2006, H. 4, S. 840-850.-ISSN 0043-1354 sind die Auswirkungen von Ultraschall an einer Membran zur Reinigung von Wasser untersucht worden.

Ferner sind in Chen, D.; Weavers, L.K.; Walker, H.W.: Ultrasonic control of ceramic membrane fouling by particles: Effect of ultrasonic factors. In: Ultrason. Sonochem., Bd. 13, 2006, H. 5, S. 379-387.-ISSN 1350-4177 Untersuchungen zum Ultraschallreinigen von Feinstfiltersystemen durchgeführt worden.

Diesbezüglich sind weitere Untersuchungen auch in Liu, D. [u.a.]: Comparative study of ultrasound-assisted and conventional stirred dead-end microfiltration of grape pomace extracts. In: Ultrason. Sonochem., Bd. 20, 2013, H. 2, S. 708-714.-ISSN 1350-4177 durchgeführt worden, wobei ebenfalls Ultraschall zum Bearbeiten eines Dead-End Mikrofiltrationssystems verwendet worden ist.

Die Druckschrift GB 2 403 167 A beschäftigt sich mit der Aufgabe, den Filterkuchen auf einem Mikrosieb auch während der Filtration mittels Ultraschallbeaufschlagung aufzubrechen, vom Sieb abzulösen und nach Möglichkeit in eine vorbestimmte Richtung abzutransportieren. Hierbei soll die Membran jedoch selbst flexibel sein und zur Ausbildung stehender Wellen - ggf. mit wandernden Knoten - angeregt werden.

Ein Vorschlag, der von einer planaren, starren Membran ausgeht, die beispielsweise aus Edelstahl besteht, ist der Druckschrift GB 1 430 063 A zu entnehmen. Auch wenn dies nicht explizit angesprochen wird, ist hier von Kavitation an der Membranoberfläche auszugehen, wenn ein Ultraschallfeld mit einer Frequenz um 25 kHz eingestrahlt wird. Zum Abtransport des abgelösten Filterkuchens wird die Membran unter einem Winkel gegenüber der Horizontale angeordnet, d.h. sie wird als schiefe Ebene aufgestellt. Die Suspension wird von oben auf die Membran geströmt, so dass sie eine Geschwindigkeitskomponente entlang der Membran aufweist. Die Bruchstücke des Filterkuchens werden durch Mitnahme durch die Suspension und anscheinend auch durch Eigengewicht zum unteren Ende der schiefen Ebene hin transportiert. Es ist anzumerken, dass die beschriebene Membran vorzugsweise eine Maschengröße, engl. "mesh size", bis zu 360 BSS aufweisen soll, was nach heutigen Standards bedeutet, dass die Poren nicht kleiner als etwa 40 Mikrometer sein sollen.

Silizium-Wafer können mittels elektrochemischer Ätzung mit einer sehr großen Anzahl gleichförmiger, kanalartiger Makroporen mit vorbestimmtem Durchmesser im Bereich einige Nanometer bis etliche Mikrometer ausgestattet werden. Die Patentschrift US 7,208,069 B2 beschreibt eine Vorrichtung zur Durchführung solcher Ätzungen, und aus der Patenschrift US 8,580,102 B2 sind ein Ätzverfahren und insbesondere eine Elektrolytzusammensetzung bekannt, die kanalartige Makroporen mit mehr als 0,5 mm Porentiefe herstellen können. Dies entspricht annähernd der gängigen Dicke eines Wafers, und das Öffnen der Poren auf der Wafer-Rückseite z.B. mittels eines Schleifverfahrens ist nicht schwer.

Silizium-Mikrosiebe sind chemisch weitgehend inert, mechanisch starr, druckbeständig und insbesondere vollkommen unempfindlich gegen Ultraschall auch bei kontinuierlicher Beaufschlagung. Sie geben an sich hervorragende Mikrosiebe ab, die kolloidale Suspensionen im Prinzip mit herausragender Trennschärfe filtern können.

Aber beim Betrieb eines Dead-End Filtersystems mit einem im Wesentlichen aufrecht stehenden Silizium-Mikrosieb, auf welches Ultraschall durch die Suspension hindurch eingestrahlt wird, zeigt sich ein unerwartetes Problem.

Der Ultraschall bewirkt zwar die gewünschte Kavitation am Mikrosieb und spült die Mikropartikel von seiner Oberfläche fort, aber die sehr kleinen Partikel zeigen etwas abseits des Mikrosiebs nur noch sehr mäßige Beweglichkeit und sinken insbesondere auch nicht unter Einwirkung der Schwerkraft schnell ab. Vielmehr agglomerieren sie mit Partikeln aus der nachströmenden Suspension und bilden einen "schwebenden" Filterkuchen in einem Abstand vor dem Mikrosieb. Vermutlich wird dieser Filterkuchen in der Schwebe gehalten durch ein Kräftegleichgewicht zwischen dem Druck der nachströmenden Suspension und dem vom Mikrosieb ausgehenden Schalldruck in unmittelbarer Nachbarschaft der Kavitationsblasen.

Es zeigt sich, dass sich der Filterkuchen vor dem Mikrosieb in einem Abstand, der mit der Größe der Kavitationsbläschen in einem Zusammenhang zu stehen scheint, mit der Zeit verdichtet. Schließlich stellt er ein erhebliches Hindernis für das Permeat dar, und die Filtration wird erkennbar verlangsamt trotz der kontinuierlichen Ultraschallbeaufschlagung des Mikrosiebs.

Es ist die Aufgabe der Erfindung, ein Filtersystem mit Mikrosieb und Ultraschallbeaufschlagung zu schaffen, das eine kontinuierliche Filtration mit hohem Durchsatz unter stetiger Entfernung des Filterkuchens im laufenden Betrieb, insbesondere auch im Dead-End Betrieb, ermöglicht.

Die Aufgabe wird gelöst durch ein Filtersystem umfassend ein starres Mikrosieb und eine wenigstens das Mikrosieb mit Ultraschall beaufschlagende Einrichtung gekennzeichnet durch einen auf der Retentatseite des Mikrosiebes angeordneten, die Fläche des Mikrosiebes bedeckenden, offenporigen Schneidkörper, dessen Oberfläche bei Beaufschlagung mit Ultraschall Kavitationsblasen ausbildet.

Die Unteransprüche geben vorteilhafte Ausgestaltungen der Erfindung an.

Der erfindungsgemäß vorgesehene, offenporige Schneidkörper stellt kein wesentliches Strömungshindernis für die Suspension auf ihrem Weg zum Mikrosieb dar. Vielmehr wird er während der Filtration praktisch ungehindert von nachfließender Suspension durchströmt. Er entfaltet selbst keinerlei Filterwirkung. Er weist einen dreidimensional verbundenen, durch die Außenfläche des Schneidkörpers für die Suspension zugänglichen Porenraum auf und wird in diesem Sinne als offenporig bezeichnet. Als Außenfläche wird hier eine geschlossene Fläche bezeichnet, die den Schneidkörper enthält und seine Form nachbildet. Sie ist zu unterscheiden von seiner Oberfläche, die auch die sehr viel größere innere Oberfläche mit umfasst. Es ist erfindungsgemäß vorgesehen, dass die Suspension in das Innere des Schneidkörpers eintritt, d.h. dass insbesondere seine Außenfläche für die Suspension durchlässig ausgebildet ist.

Die charakteristische Porenbreite des offenporigen Schneidkörpers soll hier als die schmalste Lückenbreite des verbundenen Porenraums gemittelt über alle Raumrichtungen erklärt sein. Ein Feststoffpartikel in der Suspension müsste einen deutlich größeren Durchmesser als die charakteristische Porenbreite aufweisen, um in einen Bereich des Schneidkörpers zu gelangen, in dem es allein aufgrund seiner Größe stecken bleiben könnte. Partikeln mit Durchmessern kleiner als die charakteristische Porenbreite stehen hingegen sehr viele Pfade zur Verfügung, auf denen sie das Innere des Schneidkörpers vollständig durchqueren können.

Es ist eine bevorzugte Ausgestaltung der Erfindung, die charakteristische Porenbreite des Schneidkörpers wenigstens eine Größenordnung größer als die Durchmesser der Öffnungen im Mikrosieb auszulegen. Besonders bevorzugt ist sie sogar wenigstens eine Größenordnung größer als der größte Partikeldurchmesser in der Suspension, falls dieser vorbekannt ist.

Zur weiteren Erläuterung der Erfindung dient auch die einzige Figur.

Dabei zeigt:

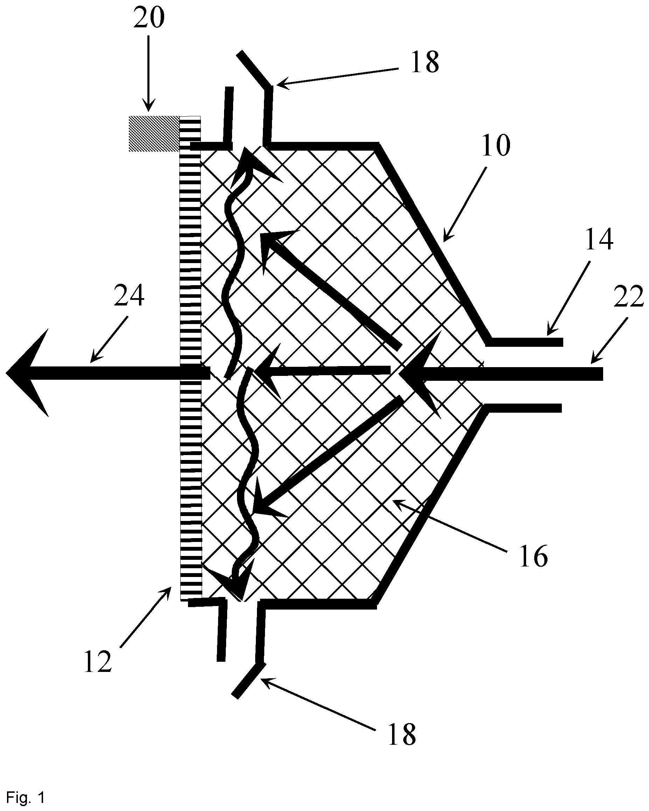

- Fig. 1: eine Skizze des Dead-End Filtersystems mit Zu- und Abflüssen im laufenden Betrieb.

Beispielsweise und bevorzugt wird der Schneidkörper aus Draht, vorzugsweise aus Metalldraht, gebildet und liegt in der Struktur eines Drahtgeflechts oder auch eines Drahtknäuels vor. Beispielsweise kann der Schneidkörper als ein Formkörper aus handelsüblicher Stahlwolle ausgebildet sein und etwa die äußere Form eines Quaders, Zylinders oder Kegels aufweisen. Dann fallen Mantel- und Deckflächen von Quader, Zylinder oder Kegel mit den Außenflächen des Schneidkörpers zusammen. Zur Oberfläche des Schneidkörpers zählen indes alle Drahtoberflächen auch innerhalb seiner Außenfläche.

Die charakteristische Porenbreite des Schneidkörpers wird im Falle des Schneidkörpers aus Draht bestimmt durch den Nächstnachbarabstand zweier Drähte im Drahtgeflecht oder Drahtknäuel gemittelt über alle Raumrichtungen.

Die erfindungswesentliche Eigenschaft des Schneidkörpers ist die, dass er unter Beaufschlagung mit Ultraschall an seiner Oberfläche Kavitationsblasen ausbildet. Dies geschieht folglich vorwiegend im Inneren des Schneidkörpers und führt zu einer stark erhöhten ungeordneten Bewegung der Bruchstücke des Filterkuchens, d.h. hat den Effekt einer beachtlichen Steigerung der Diffusionsgeschwindigkeit von Bruchstücken des Filterkuchens innerhalb des Schneidkörpers. In der unmittelbaren Nachbarschaft der Schneidkörperaußenfläche kann sich auch kein schwebender Filterkuchen bilden oder erhalten, da er von den Implosionen der Kavitationsblasen "zerschnitten" wird.

Es ist daher erfindungsgemäß sehr zweckmäßig, den Schneidkörper so vor dem Mikrosieb anzuordnen, dass eine seiner Außenflächen sich etwa dort befindet, wo zuvor der schwebende Filterkuchen beobachtet worden ist.

Der Schneidkörper soll die Fläche des Mikrosiebs bedecken. Er kann dazu unmittelbar vor den Poren des Mikrosiebs - vorzugsweise sogar in Kontakt mit dem Mikrosieb - derart angeordnet werden, dass die Suspension keine Pore des Mikrosiebs erreichen kann, ohne zuvor einen Teil des Schneidkörpers zu durchströmen. Bereiche des Mikrosiebs ohne Bedeckung durch den Schneidkörper neigen dazu, erneut einen schwebenden Filterkuchen zu bilden und zu verstopfen.

Die Beaufschlagung des Schneidkörpers mit Ultraschall erfolgt unvermeidlich, wenn das starre Mikrosieb mit Ultraschall beaufschlagt wird. In einer möglichen Ausgestaltung wird der Ultraschall durch den Schneidkörper hindurch auf das Mikrosieb eingestrahlt. In einer alternativen Ausgestaltung erfolgt der Ultraschalleintrag in das starre Mikrosieb durch am Mikrosieb angeordnete Ultraschallgeber, z.B. Piezo-Transducer. Das in Schwingung versetzte Mikrosieb gibt dann zwangsläufig auch einen Teil der so eingebrachten Energie über Körperschall oder Eintrag in die Suspension an den Schneidkörper ab und erregt an dessen Oberfläche Kavitationsblasen.

Wie bereits erwähnt, zerschneidet der mit Ultraschall beaufschlagte Schneidkörper etwaig in der Nähe seiner Außenfläche auftretenden, schwebenden Filterkuchen und erzwingt zugleich den raschen Transport und die homogene Verteilung der Filterkuchenbruchstücke durch seinen inneren, dreidimensional verbundenen Porenraum hindurch. Jedes Bestreben der Bruchstücke, sich innerhalb des Schneidkörpers anzulagern oder anzusammeln, wird durch die allgegenwärtigen Kavitationsblasen vereitelt. Die Bruchstücke sehen sich vielmehr veranlasst, fortlaufend in Bewegung zu bleiben und irgendeinem der für sie passierbaren Pfade durch den Schneidkörper zu folgen, bis sie schließlich den Schneidkörper unter Durchtreten seiner Außenfläche wieder verlassen. An welchen Stellen der Außenfläche dies geschieht, hängt auch von Konzentrationsgradienten und dem Druck der nachströmenden Suspension ab. Diese Stellen sind ohne weiteres empirisch feststellbar. Bevorzugt an diesen Stellen können nahe an der Außenfläche des Schneidkörpers Senken für die Bruchstücke angeordnet werden.

Damit die hohe Diffusionsgeschwindigkeit der Bruchstücke möglichst lange erhalten bleibt - ist es von Vorteil, für den Schneidkörper entlang der Anströmrichtung des Mikrosiebes eine angemessene Tiefe vorzusehen. Vor einem sehr flachen Schneidkörper, der wie eine Membran auf dem Mikrosieb aufliegt, könnte sich sonst erneut ein schwebender Filterkuchen ausbilden. Es spricht jedoch nach Erkenntnis der Erfinder nichts dagegen, einen Schneidkörper mit einer Tiefe von etlichen Zentimetern zu verwenden, so dass praktisch alle Diffusionspfade der Filterkuchenbruchstücke mit hoher Wahrscheinlichkeit innerhalb des Schneidkörpers verlaufen. Der Suspensionsfluss wird dadurch nicht erkennbar beeinträchtigt.

Das erfindungsgemäße Filtersystem weist vorzugsweise an wenigstens einer Außenseite des Schneidkörpers einen Sammelbehälter für den Filterkuchen auf. In diesen Sammelbehälter kann der zerkleinerte Filterkuchen hineindiffundieren.

Vorzugsweise sind Mikrosieb, Schneidkörper und Ultraschall-gebende Einrichtung in einem Gehäuse montiert, das über einen Zufluss für die Suspension und einen Abfluss für das Permeat verfügt. Der das Mikrosieb bedeckende Schneidkörper ist unmittelbar neben dem Mikrosieb auf der Retentatseite angeordnet. Es ist vorteilhaft, den Sammelbehälter mit einer verschließbaren Öffnung an das Gehäuse im Bereich der Außenfläche des Schneidkörpers anzuflanschen. Ist der Sammelbehälter gefüllt, kann die Öffnung verschlossen und der Sammelbehälter im laufenden Betrieb des Filtersystems ausgetauscht werden.

Aus Fig. 1 ist ein möglicher Aufbau eines erfindungsgemäßen Filtersystems als Skizze ersichtlich.

In einem halboffenen Gehäuse (10), das insbesondere aus einem Kunststoff gebildet sein kann, ist eine Halterung für ein flaches Mikrosieb (12), beispielsweise einen mit kanalartigen Makroporen ausgestatteten Silizium-Wafer, derart angeordnet, dass das eingesetzte Mikrosieb (12) das Gehäuse (10) verschließt. Das Gehäuse weist weiterhin einen auf das Mikrosieb (12) gerichteten Zufluss (14) auf. Der Schneidkörper (16) ist als ein Drahtknäuel, z.B. aus Stahldraht, ausgebildet, das den gesamten Innenbereich des Gehäuses (10) zwischen Zufluss (14) und Mikrosieb (12) ausfüllt.

Es wird für die Diffusion der Filterkuchenbruchstücke innerhalb des gesamten Gehäuses (10) als vorteilhaft betrachtet, dass die Außenfläche des Schneidkörpers (16) wenigstens bereichsweise die Wand des Gehäuses (10) berührt. Überdies ist es bevorzugt, dass der Schneidkörper (16) entlang des Mikrosiebs (12) und senkrecht zum Mikrosieb (12) ähnliche Abmessungen aufweist. Aus diesem Grund ist der Schneidkörper (16) hier etwa so breit wie tief und dadurch das Innere des Gehäuses (10) ausfüllend ausgelegt.

In der Nähe des Mikrosiebs (12) sind in Fig. 1 beispielhaft zwei verschließbare Auslässe (18) für Filterkuchenbruchstücke in der Wand des Gehäuses (10) nahe der Außenfläche des Schneidkörpers (16) vorgesehen. An die Auslässe (18) können austauschbare Auffangbehälter für Filterkuchen (nicht dargestellt) angeflanscht werden. Ein Ultraschallgeber (20), beispielsweise ein Piezo-Transducer, ist mit dem Mikrosieb (12) verbunden, um Körperschall im Frequenzbereich oberhalb von 20 kHz in das Mikrosieb (12) einzutragen. Ein Anteil der Schallenergie wird dabei auch an den Schneidkörper (16) übertragen, vor allem, wenn er das Mikrosieb (12) selbst berührt. Entlang des Mikrosiebs (12) und im Inneren des Schneidkörpers (16) werden dann Kavitationsblasen ausgebildet.

Die durch den Zufluss (14) auf Mikrosieb (12) und Schneidkörper (16) gerichtete Suspensionseinströmung (22) durchquert den Schneidkörper (16) praktisch ungehindert und wird allenfalls etwas verwirbelt und seitwärts verteilt, wie angedeutet durch die drei divergenten Pfeile in der Mitte von Fig. 1. Das Mikrosieb (12) kann nur vom Permeat durchquert werden, und die Permeatströmung (24) kann auf der Permeatseite des Mikrosiebs (12) einem Abfluss (nicht dargestellt) in ein Rohrsystem oder dergleichen zugeführt werden. Anderenfalls stellt das Mikrosieb (12) selbst den Permeatauslass dar.

Das Retentat ist durch die Erfindung daran gehindert, in der Nähe des Schneidkörpers (16) einen größeren Filterkuchen zu bilden. Wo immer größere Partikel agglomerieren oder sich anlagern wollen, werden sie von der im gesamten Schneidkörper (16) auftretenden Kavitation zerschnitten und in Bewegung gehalten. Sie führen solange eine rasche Diffusionsbewegung - angedeutet durch die gewellten Pfeile - durch, bis sie einen der Auslässe (18) erreichen. Erst dort können sie in die Auffangbehälter diffundieren und sich verdichten, ggf. sedimentieren.

## Patentansprüche

1. Suspension-Filtration-Filtersystem umfassend ein starres Mikrosieb (12) und eine wenigstens das Mikrosieb (12) mit Ultraschall beaufschlagende Einrichtung (20),
**gekennzeichnet durch**
einen auf der Retentatseite des Mikrosiebes (12) angeordneten, die Fläche des Mikrosiebes (12) bedeckenden, offenporigen Schneidkörper (16), wobei die Offenporigkeit hierbei als ein dreidimensional verbundener, durch die Außenfläche des Schneidkörpers für die Suspension zugänglicher Porenraum ausgebildet ist, dessen Oberfläche bei Beaufschlagung mit Ultraschall Kavitationsblasen ausbildet.

2. Suspension-Filtration-Filtersystem nach Anspruch 1,
**dadurch gekennzeichnet, dass**
der Schneidkörper (16) eine Außenfläche, nämlich eine geschlossene Fläche, die den Schneidkörper enthält und seine Form nachbildet, und eine innere Oberfläche aufweist, wobei diese sehr viel größer als die Außenfläche ist, wobei die Außenfläche durchlässig für die Suspension ausgebildet ist.

3. Suspension-Filtration-Filtersystem nach einem der vorangehenden Ansprüche,
**dadurch gekennzeichnet, dass**
die charakteristische Porenbreite des Schneidkörpers (16) wenigstens eine Größenordnung größer als die Durchmesser der Öffnungen im Mikrosieb (12) vorbestimmt ist.

4. Suspension-Filtration-Filtersystem nach Anspruch 3,
**dadurch gekennzeichnet, dass**
die charakteristische Porenbreite des Schneidkörpers (16) wenigstens eine Größenordnung größer als der größte Partikeldurchmesser in der zu filternden Suspension vorbestimmt ist.

5. Suspension-Filtration-Filtersystem nach einem der vorangehenden Ansprüche,
**dadurch gekennzeichnet, dass**
der Schneidkörper (16) als ein dreidimensionales Geflecht oder Knäuel aus Metalldraht ausgebildet ist.

6. Suspension-Filtration-Filtersystem nach einem der vorangehenden Ansprüche,
**dadurch gekennzeichnet, dass**
der Schneidkörper (16) entlang der Anströmrichtung des Mikrosiebs (12) eine Tiefe von mehreren Zentimetern aufweist.

7. Suspension-Filtration-Filtersystem nach einem der vorangehenden Ansprüche,
**dadurch gekennzeichnet, dass**
der Schneidkörper (16) entlang des Mikrosiebs (12) und senkrecht zum Mikrosieb (12) ähnliche Abmessungen aufweist.

8. Suspension-Filtration-Filtersystem nach einem der vorangehenden Ansprüche,
**dadurch gekennzeichnet, dass**
Mikrosieb (12) und Schneidkörper (16) in einem Gehäuse (10) angeordnet sind, wobei das Gehäuse (10) einen auf Schneidkörper (16) und Mikrosieb (12) gerichteten Zufluss für die Suspension (14) und einen Auslass für das Permeat sowie wenigstens einen verschließbaren Auslass für Filterkuchenbruchstücke (18) in der Wand des Gehäuses (10) nahe der Außenfläche des Schneidkörpers (16) aufweist.

9. Suspension-Filtration-Filtersystem nach Anspruch 8,
**gekennzeichnet durch**
einen an dem wenigstens einen verschließbaren Auslass (18) angeordneten, austauschbaren Auffangbehälter für Filterkuchenbruchstücke.

10. Suspension-Filtration-Filtersystem nach einem der vorangehenden Ansprüche,
**dadurch gekennzeichnet, dass**
die Einrichtung (20) zur Beaufschlagung des Mikrosiebes (12) mit Ultraschall wenigstens einen mit dem Mikrosieb (12) verbundenen Ultraschallgeber (20) umfasst.

## Claims

1. A suspension-filtration filter system comprising a rigid micro-screen (12) and a device (20) which subjects at least the micro-screen (12) to ultrasound,
**characterised by**
an open-pore separating body (16) arranged on the retentate side of the micro-screen (12) and covering the face of the micro-screen (12), wherein the open-pore structure here is formed as a three-dimensionally connected pore space which is accessible to the suspension via the outer face of the separating body and whereof the surface forms cavitation bubbles when subjected to ultrasound.

2. The suspension-filtration filter system according to Claim 1,
**characterised in that**
the separating body (16) has an outer face, namely a closed face, which contains the separating body and replicates its shape, and an inner surface, wherein this is very much larger than the outer face, wherein the outer face is permeable to the suspension.

3. The suspension-filtration filter system according to one of the preceding claims,
**characterised in that**
the characteristic pore width of the separating body (16) is predetermined to be at least an order of magnitude larger than the diameter of the openings in the micro-screen (12).

4. The suspension-filtration filter system according to Claim 3,
**characterised in that**
the characteristic pore width of the separating body (16) is predetermined to be at least an order of magnitude larger than the largest particle diameter in the suspension to be filtered.

5. The suspension-filtration filter system according to one of the preceding claims,
**characterised in that**
the separating body (16) is formed as a three-dimensional mesh or bundle of metal wire.

6. The suspension-filtration filter system according to one of the preceding claims,
**characterised in that**
the separating body (16) has a depth of several centimetres along the inflow direction of the micro-screen (12).

7. The suspension-filtration filter system according to one of the preceding claims,
**characterised in that**
the separating body (16) has similar dimensions along the micro-screen (12) and perpendicularly to the micro-screen (12).

8. The suspension-filtration filter system according to one of the preceding claims,
**characterised in that**
the micro-screen (12) and separating body (16) are arranged in a housing (10), wherein the housing (10) has an inlet for the suspension (14), which inlet is directed towards the separating body (16) and the micro-screen (12), and an outlet for the permeate and at least one closable outlet for filter cake fragments (18) in the wall of the housing (10) near to the outer face of the separating body (16).

9. The suspension-filtration filter system according to Claim 8,
**characterised by**
a replaceable collecting container for filter cake fragments, which is arranged at the at least one closable outlet (18).

10. The suspension-filtration filter system according to one of the preceding claims,
**characterised in that**
the device (20) for subjecting the micro-screen (12) to ultrasound comprises at least one ultrasound transmitter (20) connected to the micro-screen (12).

## Revendications

1. Système de filtre pour la filtration de suspension comprenant un micro-tamis rigide (12) et un dispositif (20) qui applique des ultrasons sur au moins le micro-tamis (12),
**caractérisé par**
un corps de coupe (16) à pores ouverts disposé du côté rétentat du micro-tamis (12) et recouvrant la surface du micro-tamis (12), la structure en pores ouverts étant formée pour cela comme un volume poreux interconnecté en trois dimensions accessible à la suspension depuis la surface extérieure du corps de coupe, et dont la surface forme des bulles de cavitation lorsqu'elle est exposée aux ultrasons.

2. Système de filtre pour la filtration de suspension selon la revendication 1,
**caractérisé en ce que**
le corps de coupe (16) présente une surface extérieure, à savoir une surface fermée contenant le corps de coupe et reproduisant sa forme, et une surface intérieure qui est beaucoup plus grande que la surface extérieure, la surface extérieure étant conçue perméable à la suspension.

3. Système de filtre pour la filtration de suspension selon l'une des revendications précédentes,
**caractérisé en ce que**
la largeur de pore caractéristique du corps de coupe (16) est prédéterminée pour être au moins d'un ordre de grandeur supérieur aux diamètres des ouvertures dans le micro-tamis (12).

4. Système de filtre pour la filtration de suspension selon la revendication 3,
**caractérisé en ce que**
la largeur de pore caractéristique du corps de coupe (16) est prédéterminée pour être au moins d'un ordre de grandeur supérieur au plus grand diamètre de particules dans la suspension à filtrer.

5. Système de filtre pour la filtration de suspension selon l'une des revendications précédentes,
**caractérisé en ce que**
le corps de coupe (16) est réalisé sous la forme d'un treillis ou d'une pelote tridimensionnelle en fil métallique.

6. Système de filtre pour la filtration de suspension selon l'une des revendications précédentes,
**caractérisé en ce que**
le corps de coupe (16) présente une profondeur de plusieurs centimètres dans la direction d'écoulement du micro-tamis (12).

7. Système de filtre pour la filtration de suspension selon l'une des revendications précédentes,
**caractérisé en ce que**
le corps de coupe (16) présente des dimensions similaires le long du micro-tamis (12) et perpendiculairement au micro-tamis (12).

8. Système de filtre pour la filtration de suspension selon l'une des revendications précédentes,
**caractérisé en ce que**
le micro-tamis (12) et le corps de coupe (16) sont disposés dans un boîtier (10), le boîtier (10) présentant dans la paroi du boîtier (10) à proximité de la surface extérieure du corps de coupe (16) une entrée pour la suspension (14) dirigée vers le corps de coupe (16) et le micro-tamis (12) et une sortie pour le perméat ainsi qu'au moins une sortie pouvant être fermée pour des fragments du gâteau de filtration (18).

9. Système de filtre pour la filtration de suspension selon la revendication 8,
**caractérisé par**
un récipient collecteur interchangeable pour des fragments du gâteau de filtration, lequel est disposé à l'au moins une sortie (18) pouvant être fermée.

10. Système de filtre pour la filtration de suspension selon l'une des revendications précédentes,
**caractérisé en ce que**
le dispositif (20) pour appliquer des ultrasons sur le micro-tamis (12) comprend au moins un générateur d'ultrasons (20) relié au micro-tamis (12).
